# EUROPÄISCHE PATENTSCHRIFT

(11) **EP 0 494 280 B1**
(45) Veröffentlichungstag und Bekanntmachung des Hinweises auf die Patenterteilung: **09.11.1994**
(21) Anmeldenummer: 91912090.7
(22) Anmeldetag: 05.07.1991
(51) Int. Cl.: B29C 63/00, F16L 55/165

(54) **VERFAHREN ZUM INNENVERKLEIDEN VON ROHRLEITUNGEN**
PROCESS FOR LINING PIPE LINES
PROCEDE DE REVETEMENT INTERIEUR DE CANALISATIONS

(30) Priorität: 25.07.1990 DE 4023549
(43) Veröffentlichungstag der Anmeldung: 15.07.1992
(73) Patentinhaber: SCHMIDT, Manfred, D-24226 Heikendorf (DE)
(72) Erfinder: SCHMIDT, Manfred, D-24226 Heikendorf (DE)
(74) Vertreter: Tönnies, Jan G., Dipl.-Ing.
(86) Internationale Anmeldenummer: DE9100554
(87) Internationale Veröffentlichungsnummer: WO9201552

(56) Entgegenhaltungen:
- EP-A- 301 697
- WO-A-87/04226
- WO-A-88/01707
- WO-A-88/09897
- CH-A- 676 029
- GB-A- 2 072 300
- GB-A- 2 074 691
- GB-A- 2 188 695
- US-A- 3 560 295
- US-A- 3 758 361

## Beschreibung

Die Erfindung betrifft ein Verfahren zur Innenverkleiden von Rohrleitungen, bei dem ein mehrschichtiger, mit einem mit einem temperaturreaktivem Harz getränkten Gewebe versehener Schlauch in die innenzuverkleidende Rohrleitung eingezogen, an seinen Enden verschlossen und durch Einbringen von nicht erwärmter Luft aufgeblasen wird, und das temperaturreaktive Harz durch durch den Schlauch geführte Warmluft ausgehärtet wird.

Die Erfindung betrifft ebenfalls einen Schlauch gemäß Ober begriff des Anspruchs 8. Ein Solcher Schlauch ist aus der WO 87/04226 bekannt.

Bei einer solchen Auskleidung, wie sie z. B. in der DE 23 50 976 C2 vorgeschlagen wird, konnte bisher keine kontrollierte gleichmäßige Aushärtung des temperatureaktiven Harzes erreicht werden, da die Wärmeenergie der zirkulierenden Luft bei deren Eintritt in den Schlauch von den angeströmten Partien im Innenschlauch vergleichsweise schnell aufgenommen wird, so daß eine geeignete Regelung an den zu großen einzubringenden Luftvolumina und der Trägheit des Systems scheitert.

Weiter stand der Verwendung von Luft bisher das Vorurteil entgegen, daß sie nicht geeignet sei, genügend große Mengen von Wärme über genügend große Strecken zu transportieren.

Bei einer anderen ähnlichen Vorgehensweise, bei der auch ein Schlauch eingezogen wird, wie sie z. B. in der EP 0 301 204 A1 vorgeschlagen wird, wird ein lichtreaktives Harz verwendet, dessen Abbinden mit Hilfe einer sehr starken UV-Licht-Quelle hervorgerufen wird, die durch den Schlauch gezogen wird.

Dabei ergibt sich jedoch das Problem, daß das Licht immer nur sehr punktuell wirkt, so daß immer nur ein Teil der abzubindenden Leitung bestrahlen wird. Dies hat zur Folge, daß man mit hohem Lichtfluß in einer möglichst kurzen Zeit ein Schlauchstück zum Reagieren bringen möchte. Selbst bei langsamer Transportgeschwindigkeit mit relativ niedrigen Lichtstärken ergeben sich jedoch durch die punktuell freiwerdende Reaktionswärme erhebliche Probleme mit der Abführung der entstehenden Reaktionswärme.

Eine weitere bekannte Methode (siehe: GB-A-2074 691) ist die Einbringung von Wasser, das entweder vorher oder in situ aufgeheizt wird, zum Aufblasen und Formbarmachen von thermoelastischen Schläuchen.

Diese Methode hat den Nachteil erheblichen Energie- und Wasserverbrauchs, verbunden mit den Zubringungsproblemen beider Ressourcen.

Die WO 88/09897 schlägt von, den Aushärteprozeß bei nach nicht völlig aufgeblasenem Schlauch vorzunehmen.

Der Erfindung liegt damit die Aufgabe zugrunde, ein verbessertes Verfahren zur Innenauskleidung von Rohrleitungen zu schaffen, bei dem ein kontrolliertes gleichmäßiges Aushärten des Harzes möglich wird.

Erfindungsgemäß wird diese Aufgabe durch die im kennzeichnenden Teil des Anspruches 1 angegebenen Merkmale gelöst.

Würde man die Phase mit dem flüssigen Harz nicht in der obengenannten Art und Weise nutzen, kann es vorkommen, daß das Harz sich im unteren Bereich des Schlauches im gewebe sammelt und es zu einem Defizit von Harz im oberen Bereich des Schlauches kommt. Auch kann ansonsten eine ungenügende Verbindung mit dem äußeren Rohr im oberen Bereich entstehen.

In einer bevorzugten Ausführung wird der Druck und die Fließgeschwindigkeit der Luft durch die Steuerung der Ein- und Auslaßquerschnitte an den Enden des Schlauches geregelt werden. Durch diese Regelung ist es möglich, Druck und Temperatur über die Fließgeschwindigkeit des Mediums schnell und in zuverlässiger Weise zu regeln.

Weiter wird vorgeschlagen, daß die erwärmte Luft mittels eines Dampferzeugers erzeugt wird. Ein derartiger Dampferzeuger ist vergleichsweise kompakt und kann hohe Leistungen sehr schnell erbringen. Der Wasserdampfgehalt der erwärmten Luft wird zusätzlich durch Entziehen überschüssigen Wassers mit einem Kondensor geregelt. Ein derartiger Wasserabscheider verhindert einen übermäßigen Niederschlag von Feuchtigkeit im Inneren des Schlauches, der sich durch die Schwerkraft an einem Ort sammeln würde, und dort die Aushärtung durch eine Veränderung der lokalen Temperatur beeinflußen würde.

Weiter ist es vorteilhaft, die dem Schlauch zugeführte Luft durch Beimischung von Umgebungsluft in ihrer Temperatur zu steuern. Diese Beimischung kann sehr schnell geschehen und ist daher wesentlich effektiver als ein vergleichsweises langsames "Herabfahren" der Temperatur des Dampferzeugers.

Bei dem vorgeschlagenen Verfahren ist es weiter von Vorteil, die Steuerung von Druck, Temperatur, Feuchtigkeitsgehalt und Luftdurchsatz automatisch, von an den beiden Enden des Schlauches angeordneten Sensoren für die jeweiligen Meßgrößen geregelt, vorzunehmen. Durch diese automatische Regelung wird gewährleistet, daß immer der herrschende Druck und die Temperatur aufeinander abgestimmt sind, was sehr wichtig für ein gutes Haften des Schlauches an der inneren Oberfläche des Leitungsrohres und eine gleichmäßige Ausbildung seiner Wandstärke ist.

Nach dem Aushärten des Harzes wird vorgeschlagen, daß die Temperatur der eingeblasenen Luft weiter erhöht wird, so daß das temperaturreaktive Harz künstlich und vorzeitig altert. Da dies gegebenenfalls noch unter Aufbringung von Druck geschieht, wird verhindert, daß die fertige Auskleidung später langsam altert, wobei sie sich zusammenzöge, was zwischen dem auszukleidenden Rohr und der Auskleidung eine unerwünschte Spaltbildung zur Folge hätte.

Weiter wird vorgeschlagen, daß ein Tempern durch erhöhte Temperatur- und/oder Druckbeaufschlagung mindestens eine halbe Stunde andauert. Weiter kann die Zeit dafür nicht gesenkt werden, da sonst eine ungenügende Durchdringung der Temperatur durch die Harzschichten die Folge wäre, bzw. die Abkühlung von außen durch die vergleichsweise kalte umgebende Rohrleitung zu schnell erfolgen würde.

Zur Durchführung des Verfahrens wird weiter ein Schlauch vorgeschlagen mit wenigstens einer harzundurchlässigen Innenfolie, einem harzaufnehmenden Gewebe und einer Aussenfolie, wobei die Folien aus einer Mehrzahl von unterschiedlichen Plastikfolien aufgebaut sind, von denen wenigstens je eine aus dehnbarem Plastikmaterial und eine aus einem zugfestem Material besteht. Damit soll sichergestellt werden, daß sich beim Aufblasen des Schlauches keine "Blasen" oder "Ausbeulungen" an Stellen bilden, die eine geringere Materialdichte besitzen und dadurch der Schlauch zum Platzen gebracht werden könnte, oder es zu ungleichmäßiger Wandstärkenbildung kommt, andererseits aber der Schlauch sich an kleine Unebenheiten anpassen kann und diese zu seiner Vernakerung nutzen kann.

Eine oder mehr Folien aus antihaftbeschichtetem Material, insbesondere Polyamid können zusätzlich dafür vorgesehen werden, ein Auffalten des zusammengelegt eingezogenen Schlauches und sein Einziehen zu begünstigen. Ansonsten wird Polyäthylen als Material vorgeschlagen.

Weitere Merkmale und Vorteile der Erfindung ergeben sich aus der nachfolgenden Beschreibung eines bevorzugten Ausführungsbeispieles der Erfindung, das anhand der beiliegenden Zeichnung näher erläutert wird. Dabei zeigt:
- Fig. 1: den schematischen Aufbau des Meß- und Regelsystems zum Aufblasen und Aushärten des eingezogenen Schlauches,
- Fig. 2: eine Kurve über den Verlauf der Temperatur bei der Durchführung des Verfahrens, und
- Fig. 3: eine Kurve über den Verlauf des Druckes bei der Durchführung des Verfahrens.

Das Verfahren wird durchgeführt, indem man wie folgt verfährt: am Beginn des Auskleidens wird das Gewebe im Schlauch, der zur Auskleidung benutzt werden soll, mit dem temperaturreaktivem Harz getränkt; daran anschliessend wird der Schlauch vorzugsweise noch einmal bevor er in die Rohrleitung eingebracht wird, auf Dichtigkeit geprüft, indem man ihn mit Luft aufbläst, damit man später nicht einen halb aufgeblasenen Schlauch aus der auszukleidenden Leitung entfernen muß, falls der Schlauch nicht dicht war.

Danach wird der Schlauch 32, nachdem die Luft abgelassen worden ist, in flachem zusammengefalteten Zustand in die auszukleidende Rohrleitung gezogen. Liegt der Schlauch 32 an der vorbestimmten Position, werden Endstücke angebracht, die dazu dienen, den Schlauch 32 abzudichten, und die die Luftzuführungsschläuche, bzw. die Mittel zum Verringern der Lufteinlaß- und Auslaßquerschnitte beinhalten. Außerdem sind in diesen Endstücken auch die Sensoren 10 und 30, die später zur Regelung der Druck-, Feuchtigkeits- und Temperatur - Verhältnisse im Schlauch 32 dienen, befestigt. Der Sensor 30 am distalen Ende des Schlauches ist dabei über Steuerleitungen 12 und 14 mit den Regler für den Dampffluß 18 und die Beimengung von Luft 16 verbunden.

Nachdem der Schlauch 32 soweit vorbereitet ist, beginnt man damit, ihn zu expandieren, indem man Luft in ihn einbläst. Hierzu wird normale Außenluft verwendet, da man noch keinen Teil des Schlauches 32 abbinden lassen möchte, solange der Schlauch 32 nicht die endgültige Form erreicht hat.

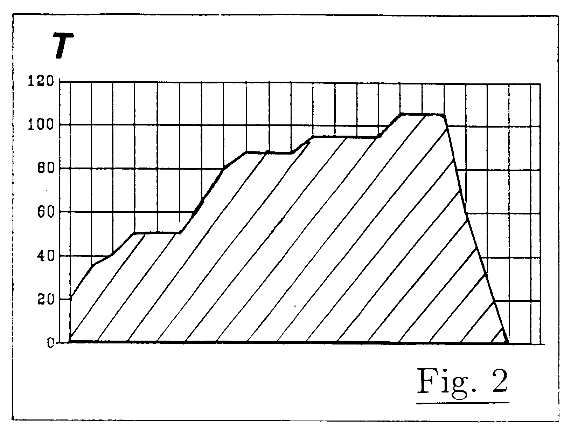

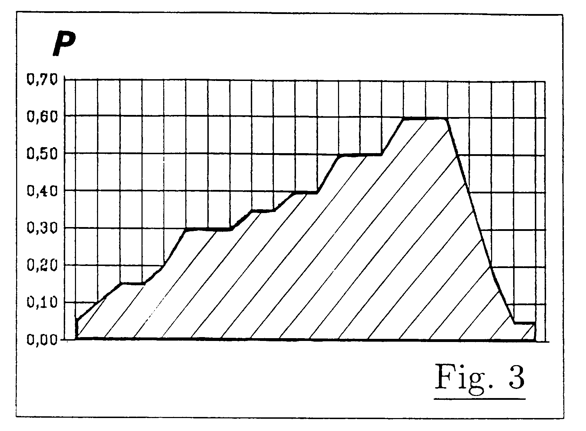

Nachdem der Schlauch 32 aufgeblasen wurde, wird die Temperatur der eingebrachten Luft bis zu einem Temperaturniveau von 40 - 45° C ( Fig. 2 ) erhöht, bei der das temperaturreaktive Harz beginnt, flüssiger zu werden, anschließend wird die Temperatur bei gleichzeitiger Steigerung des Druckes von ca. 0,15 auf ca. 0,30 bar (Fig. 3 ) über die nächsten 20 min konstant gehalten, bis durch den erhöhten Druck das durch die Schwerkraft nach unten geflossene Harz durch den Innendruck über die gesamte Innenfläche des Rohres verteilt ist und/oder der Schlauch 32 soweit gedehnt und gestreckt ist, daß er eng an der Rohrleitungsinnenwand anliegt; erst danach wird die Temperatur weiter erhöht ( auf typisch über 80° für mindestens 20 min ), um das Harz weiter auszuhärten. Vorzugsweise ist dabei das das Harz aufnehmende Gewebe elastisch, was das Pressen des Harzes gegen die Schwerkraft begünstigt. Eine Temperaturkurve und eine Druckkurve, die sich in der Praxis bewährt haben, sind in Fig. 2 und 3 enthalten. Dabei repräsentiert das horizontale Raster jeweils einen Zeitraum von 10 min.

Die neu eingebrachte erwärmte Luft sollte dabei möglichst schnell durch den Schlauch treten, damit die von der Einbringstelle entfernten Teile des Schlauches in der gleichen Art und Weise wie die dem Einlaß benachbarten Teile abbinden, insbesondere die gleiche Zeit der erwärmten Luft ausgesetzt sind. Daher wird man selbst dann, wenn ein Druck im Schlauch aufgebaut sein soll, Luft am Auslaß in relativ großer Menge austreten lassen, nur wird der Querschnitt des Auslaßes um so viel kleiner gewählt sein, daß in Abhängigkeit vom Einlaßquerschnitt bzw. der Menge der eingebrachten erwärmten Luft ein entsprechender Druck aufgebaut wird.

Sollte eine Temperaturdifferenz zwischen dem Temperatursensor 30 am Luftauslaß und dem Temperatursensor 10 am Lufteinlaß zu groß werden, ist die eingebrachte Luftmenge zu erhöhen, und entsprechend der Auslaßquerschnitt zu vergrößern, wodurch der Luftdurchsatz bei ansonsten gleichen Bedingungen erhöht wird. Die Temperaturdifferenz wird sich dadurch verringern.

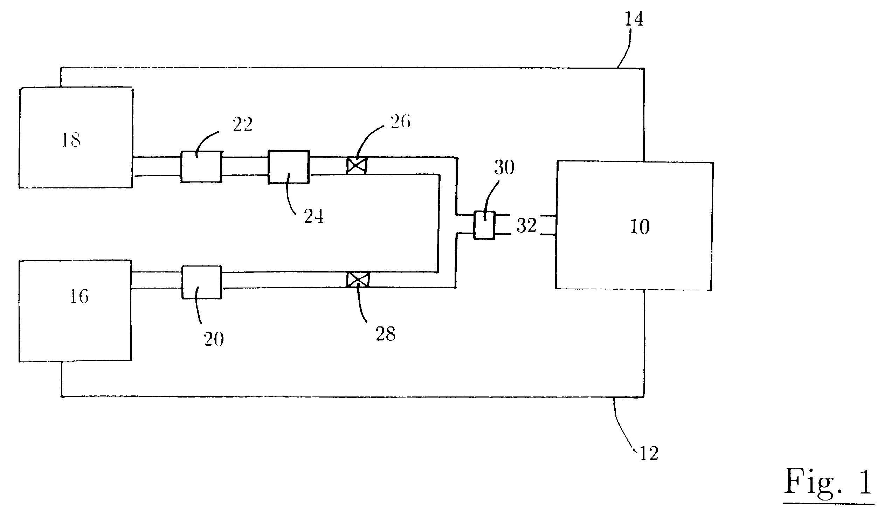

Die Benutzung von Wasserdampf als Transportmedium der Wärmeenergie erleichtert hierbei die oben beschriebenen Maßnahmen, da Dampf wesentlich mehr Energie über größere Strecken transportieren kann. Dabei wird zur Erzeugung ein Dampferzeuger eingesetzt, der typischerweise Dampf mit einer Temperatur von 160° C erzeugt. Es ist dabei jedoch erwünscht, den Wassergehalt des Dampfes zu kontrollieren, um nicht eine zu starke Kondensation im aufzublasenden Schlauch 32 zu erhalten. Daher ist in dem Verfahren ein Entzug eines Teiles des im erzeugten Dampf befindlichen Wassers vorgesehen. Dieser Entzug des Wassers wird vorzugsweise mit einem Kondensor realisiert, der es auch erlaubt, das so entzogene Wasser wiederzuverwenden. Um den Entzug zu steuern, sind ein weiterer Sensor 24, der die Luftfeuchte mißt, und ein zweiter Temperatur- und Druck-Sensor 22, der nur den Dampf mißt, in Ergänzung zum ersten Temperatur- und Druck-Sensor 30, der das mit Außenluft bereits gemischte Dampf/Luft-Gemisch mißt, zusätzlich im Regelkreis, wie er in Fig. 1 dargestellt ist, vorgesehen.

Durch Beimischung von Luft, die Umgebungstemperatur besitzt, über das Steuerventil 16 ist es sehr schnell und einfach möglich, den Dampf in seiner Temperatur zu steuern. Dabei werden Druck, Temperatur oder Feuchtigkeit, sowie der Luftdurchsatz der erwärmten Luft automatisch von Sensoren für die jeweiligen Meßgrößen gemessen und entsprechend geregelt. In einer bevorzugten Ausführung sind diese Sensoren dabei an beiden Enden des Schlauches 32 angebracht. Zusätzlich ist ein Meßfühler 20 vorgesehen, der auch die Temperatur und den Druck der beigemischten Umgebungsluft mißt.

Nach dem Aushärten des Harzes wird die Temperatur der eingeblasenen Luft weiter bis auf über 100° C erhöht, so daß das temperaturreaktive Harz künstlich und vorzeitig altert. Gleichzeitig wird der Druck weiter auf bis zu 0,60 bar erhöht.

Während des Aufheizens wird wenigstens in den Phasen geringen Druckes ein schneller Luftstrom der heißen Luft bzw. des heißen Dampfes durch den Schlauch durch offene Luftventile am distalen Ende des Schlauches ermöglicht.

Insgesamt dauert das Tempern durch erhöhte Temperatur- und/oder Druckbeaufschlagung mindestens eine halbe Stunde abhängig von Rohrlänge und Durchmesser und sollte bis zu einer Temperatur von 110° C gehen.

Dadurch, daß hierdurch das nachträgliche Schrumpfen mit der etwaige Bildung eines Luftspaltes zwischen Auskleidung und Rohrinnenwand nach dem Abbinden unterbleibt und sogar ein Anpreßdruck gegen des Altrohr verbleibt, kann die Festigkeit in Verbindung mit dem Altrohr erhöht werden und ein unerwünschter Ringspalt unterbleibt.

Zur Durchführung des Verfahrens wird ein Schlauch verwendet, der aus wenigstens einer harzundurchlässigen Innenfolie und einer Außenfolie und einem mit Harz getränkten Glasfasergefecht zwischen ihnen besteht, wobei die Folien aus einer Mehrzahl von unterschiedlichen Plastikfolien aufgebaut sind, von denen wenigstens je eine aus dehnbarem Plastikmaterial und eine aus einem zugfestem Material besteht. Die Außenfolie sollte dabei zum besseren Kontakt einen sehr dehnbaren Charakter haben, so daß sie sich an Unebenheiten oder Poren des auszukleidenden Rohres fest verankern kann.

Die Festigkeit der neugeschaffenen Auskleidung kann, durch Veränderung des Gewebeaufbaus und der Dicke sehr einfach verändert werden. Vorgeschlagen wird ein vierfach gelegtes Glasfasergewebe mit einer mittleren Lage aus Filz. Der Filz verleiht dabei dem Gewebe einen schwammartigen, elastischen Charakter, der das "Hochdrücken" des flüssigen Harzes begünstigt. Das Glasfasergewebe kann dabei Zugkräfte gut aufnehmen.

Ohne Probleme kann die ausgehärtete Auskleidung die erforderlichen Stabilitätsanforderungen des Altrohres übernehmen. Dies geschieht mit der bei Verwendung von glasfaserverstärkten Kunststoffen üblichen Elastizität.

Außer der Zugabe von Härter wird weiter noch die Zugabe von viskositätserhöhenden Mitteln zum vorzugsweise verwendeten Polyester-Harz empfohlen.

Durch das breite Spektrum an Harzen können Auskleidungen geschaffen werden, die für die unterschiedlichsten zu führende Medien geeignet sind, z.B. für Medien in einem ph-Bereich von 1 - 12 oder für Medien mit sehr hohen Temperaturen ( bis 92° C in Dauerbelastung). Die hohe Temperaturbelastbarkeit ist dabei eine Folge des Temperns.

Die im Vergleich zu anderen Methoden geringe Querschnittsverringerung wird noch zusätzlich dadurch kompensiert, daß man ein erheblich glatteres Rohr erhält, das bei einer Rauhigkeit Kb < 0,02 mm (rechn. Betriebsrauhigkeit Kb = 0,25 mm) den Verlust an Querschnitt in den hydrodynamischen Berechnungen mehr als ausgleicht. Die Innenauskleidung kann dabei auch mit Harzen geschaffen werden, die es erlauben, die Leitungen nach dem Aushärten als Trinkwasserleitungen nach den Lebensmittelgesetzen zu verwenden.

Anfänglich ergaben sich bei Versuchen erhebliche Probleme mit dem konstanten Einblasen der erwärmten Luft, weil wegen der eintretenden Abkühlung der Luft im Schlauch sehr heiße Luft verwenden mußte, man aber auch den Druck möglichst ungeändert aufrechterhalten wollte, da eine Erhöhung des Druckes bei einigen Rohrleitungen, z.B. solchen aus Zement, zum Platzen führen kann, es sich jedoch andererseits ein schneller Druckanstieg ergab, wenn man heißen Dampf in den Schlauch einbrachte, da sie sich mit der vorhandenen relativ kalten Luft zu warmer Luft vermischt, die ein erheblich größeres Volumen als die beiden Komponenten besitzt.

Bei einem Verfahren gemäß der vorliegenden Erfindung werden solche Probleme nun dadurch vermieden, daß man zum einen die erzeugte Heißluft mit dem Wasserdampf mit Außenluft vermischt, und so die Temperatur herabsetzt, und daß zum anderen mit Hilfe der Drucksensoren in beiden Endstücken der Luftdruck im Schlauch immer den gerade herrschenden Temperaturverhältnissen, die ebenfalls durch Sensoren im Schlauch ermittelt werden, angepaßt werden kann, indem man den Querschnitt der Lufteintritts- oder der Luftaustrittsöffnungen entsprechend steuert. Zur Vermeidung des Rückeindringens von bereits in den Schlauch eingebrachten Dampfes in den Dampferzeuger bzw. der Mischeinrichtung sind weiter Rückschlagventile 26, 28 vorgesehen.

## Patentansprüche

1. Verfahren zum Innenverkleiden von Rohrleitungen, bei dem ein mehrschichtiger, mit einem mit einem temperaturreaktiven Harz getränkten Gewebe versehener Schlauch in die innenzuverkleidende Rohrleitung eingezogen, an seinen Enden verschlossen und durch Einbringen von nicht erwärmter Luft aufgeblasen wird, und das temperaturreaktive Harz durch durch den Schlauch geführte dampfhaltige Warmluft ausgehärtet wird,
dadurch gekennzeichnet, daß
nach Aufblasen des Schlauches mit Wasserdampf beladene Luft von einem Ende des Schlauches zu anderen Ende hindurchgeführt wird,
wobei die Temperatur der eingebrachten Luft zunächst bis zu einem Temperaturniveau erhöht wird, bei der das temperaturreaktive Harz beginnt, flüssig zu werden,
die Temperatur der Luft sodann bei gleichzeitiger Steigerung des Druckes konstant gehalten wird, bis durch den erhöhten Druck das durch die Schwerkraft sich im Schlauchquerschnitt unten sammelnde Harz durch den auf das Gewebe ausgeübten Innendruck sich gleichmäßig über den Schlauchquerschnitt verteilt,
und danach die Temperatur weiter bis über die Abbindetemperatur des Harzes erhöht wird.

2. Verfahren zum Innenverkleiden von Rohrleitungen nach Anspruch 1, dadurch gekennzeichnet, daß der Druck und die Fließgeschwindigkeit der Luft durch die Steuerung der Ein- und Auslaßquerschnitte an den Enden des Schlauches geregelt werden.

3. Verfahren zum Innenverkleidung von Rohrleitungen nach Anspruch 1 oder Anspruch 2, dadurch gekennzeichnet, daß die erwärmte Luft mittels eines Dampferzeugers erzeugt wird, und der Wasserdampfgehalt der Luft durch Entziehen überschüssigen Wassers mit einem Kondensor gesteuert wird.

4. Verfahren zum Innenverkleiden von Rohrleitungen nach einem der vorangehenden Ansprüche, dadurch gekennzeichnet, daR die Temperatur der dem Schlauch zugeführten Luft durch Zumischung von Umgebungsluft gesteuert wird.

5. Verfahren zum Innenverkleiden von Rohrleitungen nach einem der vorangehenden Ansprüche, dadurch gekennzeichnet, daß Druck, Temperatur, Feuchtigkeitsgehalt und Luftdurchsatz unter Verwendung von an beiden Enden des Schlauches angeordnete Sensoren für die jeweiligen Meßgrößen geregelt werden.

6. Verfahren zum Innenverkleiden von Rohrleitungen nach einem der vorangehenden Ansprüche, dadurch gekennzeichnet, daß die Temperatur der eingebrachten Luft zur künstlichen Alterung des temperaturreaktiven Harzes über die Abbindetemperatur hinaus erhöht wird.

7. Verfahren nach Anspruch 6, dadurch gekennzeichnet, daß das Altern unter erhöhter Temperaturbeaufschlagung über mindestens eine halbe Stunde erfolgt.

8. Schlauch zur Verwendung in dem Verfahren nach einem der vorangehenden Ansprüche mit wenigstens Innenfolie, einem harzaufnehmenden Gewebe und einer Außenfolie, gekennzeichnet durch einen Folienaufbau aus einer Mehrzahl von unterschiedlichen Plastikfolien, von denen wenigstens die Außenfolie aus dehnbarem Plastikmaterial besteht, und die Innenfolie aus einem harzundurchlässigen, zugfesten Material besteht.

9. Schlauch nach Anspruch 8, gekennzeichnet durch weitere Folien aus antihaftbeschichtetem Material, insbesondere aus Polyamid.

## Claims

1. Process for the internal lining of pipe lines, in which a multilayer hose provided with a fabric impregnated with a temperature-reactive resin is drawn into the pipe line which is to be internally lined, is sealed at its ends and is inflated by the introduction of non-heated air and the temperature-reactive resin is cured by hot air passed through the hose, characterized in that after inflating the hose air containing water vapour is passed from one end of the hose to the other, the temperature of the introduced air is initially raised to a level at which the temperature-reactive resin starts to become liquid, the temperature of the air is then kept constant accompanied by a simultaneous rise in the pressure until, as a result of the increased pressure, the resin collecting at the bottom in the hose cross-section due to gravity is uniformly distributed over the hose cross-section by the internal pressure exerted on the fabric and then the temperature is further increased to above the resin setting temperature.

2. Process for the internal lining of pipe lines according to claim 1, characterized in that the pressure and flow rate of the air are regulated by controlling the inlet and outlet cross-sections at the hose ends.

3. Process for the internal lining of pipe lines according to claims 1 or 2, characterized in that the heated air is produced by means of a steam generator and the water vapour content of the air is controlled by removing excess water with a condenser.

4. Process for the internal lining of pipe lines according to one of the preceding claims, characterized in that the temperature of the air supplied to the hose is controlled by admixing ambient air.

5. Process for the internal lining of pipe lines according to one of the preceding claims, characterized in that the pressure, temperature, moisture content and air flow rate are regulated by using sensors for the particular measured quantities positioned at both ends of the hose.

6. Process for the internal lining of pipe lines according to one of the preceding claims, characterized in that the temperature of the introduced air is raised to beyond the setting temperature for artificially ageing the temperature-reactive resin.

7. Process according to claim 6, characterized in that the ageing under increased temperature action lasts at least 30 minutes.

8. Hose for use in the process according to one of the preceding claims with at least one inner sheet, a resin-absorbing fabric and an outer sheet, characterized by a sheet structure formed from a plurality of different plastic films, whereof at least the outer film is formed from expandable plastic material and the inner film from resin-impermeable, tension-resistant material.

9. Hose according to claim 8, characterized by further films or sheets of antistick-coated material, particularly polyamide.

## Revendications

1. Procédé de revêtement intérieur de tuyauteries dans lequel on enfile dans la tuyauterie à revêtir intérieurement un tube souple multicouche pourvu d'un tissu imprégné d'une résine réactive à chaud, on bouche ce tube à ses extrémités et on le gonfle en y introduisant de l'air non chauffé, et on durcit la résine réactive à chaud au moyen d'air chaud contenant de la vapeur qu'on fait passer dans le tube souple,
caractérisé par le fait que
après gonflage du tube souple, on fait passer de l'air chargé de vapeur d'eau d'une extrémité à l'autre de celui-ci,
en élevant d'abord la température de l'air introduit jusqu'à un niveau où la résine réactive à chaud commence à devenir liquide,
ensuite, on maintient la température de l'air constante tout en élevant la pression jusqu'à ce que par la pression accrue, la résine qui se rassemble en bas par gravité dans la section du tube souple se répartisse uniformément sur cette section par la pression intérieure exercée sur le tissu,
et après cela, on élève encore la température jusqu'au-dessus de la température de prise de la résine.

2. Procédé de revêtement intérieur de tuyauteries selon la revendication 1, caractérisé par le fait qu'on règle la pression et la vitesse d'écoulement de l'air en réglant les sections d'entrée et de sortie aux extrémités du tube souple.

3. Procédé de revêtement intérieur de tuyauteries selon l'une des revendications 1 et 2, caractérisé par le fait qu'on produit l'air chauffé au moyen d'un générateur de vapeur et on règle la teneur en vapeur d'eau de l'air en extrayant l'eau en excès avec un condenseur.

4. Procédé de revêtement intérieur de tuyauteries selon l'une des revendications précédentes, caractérisé par le fait qu'on règle la température de l'air apporté au tube souple en y ajoutant de l'air ambiant.

5. Procédé de revêtement intérieur de tuyauteries selon l'une des revendications précédentes, caractérisé par le fait qu'on règle la pression, la température, l'humidité et le débit de l'air en utilisant pour les différentes grandeurs mesurées des capteurs placés aux deux extrémités du tube souple.

6. Procédé de revêtement intérieur de tuyauteries selon l'une des revendications précédentes, caractérisé par le fait qu'on élève la température de l'air introduit au-dessus de la température de prise de la résine réactive à chaud pour faire vieillir artificiellement celle-ci.

7. Procédé selon la revendication 6, caractérisé par le fait qu'on effectue le vieillissement avec action accrue de température pendant au moins une demi-heure.

8. Tube souple destiné à être utilisé dans le procédé selon l'une des revendications précédentes, comprenant au moins une feuille intérieure, un tissu absorbant la résine et une feuille extérieure, caractérisé par le fait que les feuilles sont constituées d'un grand nombre de feuilles de plastique différentes dont au moins la feuille extérieure est constituée de matière plastique extensible et la feuille intérieure est constituée d'une matière résistant à la traction et imperméable à la résine.

9. Tube souple selon la revendication 8, caractérisé par d'autres feuilles en matière à revêtement antiadhérent, en particulier en polyamide.
